(19) Europäisches Patentamt
European Patent Office
Office européen des brevets

(11) Veröffentlichungsnummer : **0 034 697**
**B2**

(12) # NEUE EUROPÄISCHE PATENTSCHRIFT

(45) Veröffentlichungstag der neuen Patentschrift : **06.05.87**

(51) Int. Cl.[4] : **C 08 L 69/00**, C 08 L 85/02

(21) Anmeldenummer : **81100178.3**

(22) Anmeldetag : **13.01.81**

(54) **Mischungen aus Polycarbonaten und Polyphosphonaten und deren Verwendung zur Herstellung von Folien.**

(30) Priorität : **25.01.80 DE 3002550**

(43) Veröffentlichungstag der Anmeldung : **02.09.81 Patentblatt 81/35**

(45) Bekanntmachung des Hinweises auf die Patenterteilung : **14.03.84 Patentblatt 84/11**

(45) Bekanntmachung des Hinweises auf die Entscheidung über den Einspruch : **06.05.87 Patentblatt 87/19**

(84) Benannte Vertragsstaaten : **DE FR GB IT NL**

(56) Entgegenhaltungen :
**DE-A- 2 111 202**
**DE-A- 2 750 989**
**US-A- 3 557 053**
**US-A- 3 830 771**
**US-A- 3 932 566**
**US-A- 4 046 724**
**US-A- 4 078 016**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Schmidt, Manfred, Dr.**
**c/o Mobay Chemical Corp.**
**New Martinsville VA 26155 (US)**
Erfinder : **Wank, Joachim, Ing. grad**
**Zülpicher Strasse 7**
**D-4047 Dormagen 5 (DE)**
Erfinder : **Reese, Eckart, Dr.**
**Aggerstrasse 22**
**D-4047 Dormagen (DE)**

EP 0 034 697 B2

**Beschreibung**

Gegenstand der Erfindung sind Folien hergestellt aus Mischungen von aromatischen Polycarbonaten und aromatischen Polyphosphonaten, insbesondere aromatischen Polymethylphosphonaten.

Folien aus Polycarbonat sind wegen ihren guten elektrischen und mechanischen Eigenschaften beispielsweise als Elektroisolierfolien hoher Wärmeformbeständigkeit in der Technik gebräuchlich. Das Brandverhalten dieser Folien entspricht nicht in allen Anwendungsfällen den technischen Anforderungen.

Es ist bekannt, flammwidrige Polycarbonatfolien beispielsweise durch Zumischen oligomerer Polycarbonate auf Basis von Tetrahalogenbisphenolen wie beispielsweise Tetrabrombisphenol A herzustellen (vgl. DE-OS 2 354 533). Derartig flammwidrig eingestellte Polycarbonatfolien haben den Nachteil, daß sie bei Fremdbeflammung korrodierend wirken infolge allmählicher Abspaltung von Halogenwasserstoff wie Bromwasserstoff und somit für Folgeschäden an den elektrischen Bauteilen verantwortlich sind.

Dies wirkt sich besonders nachteilig aus bei dem Einsatz derartiger Folien in den elektrischen Bauteilen von Verkehrs- und Transportmitteln, Fernmelde- und Datenverarbeitungsanlagen.

Hochmolekulare Polyphosphonate (s. beispielsweise deutsche Patentanmeldung P 2 944 093.5) sind Thermoplaste höchster Brandwidrigkeit bzw. Unbrennbarkeit. Daraus hergestellt Folien zeigen gute brandtechnische Eigenschaften, da im Beflammungs- oder Brandfall ebenso wie bei Temperaturen unterhalb des thermoplastischen Erweichungspunktes der Polyphosphonate korrosive Gase nicht abgespalten werden und ein Nachbrennen nicht auftritt.

Jedoch sind die elektrischen und mechanischen Eigenschaften dieser Polyphosphonatfolien nicht voll befriedigend. So zeit beispielsweise eine 0,05 mm dicke Folie, hergestellt aus einem Polymethylphosphonat des 4,4'-Dihydroxydiphenyls (vgl. Beispiel 1 der deutschen Patentanmeldung P 2 944 093.5), einen bei 140 °C auf 1/30 000 des Ausgangswertes bei 20 °C absinkenden spezifischen Durchgangswiderstand $\rho_D$ und einen steilen Anstieg des dielektrischen Verlustfaktors tan $\delta$ bei 130 bis 140 °C, während Polycarbonatfolien konstante Werte bis nahe 150 °C besitzen. Folien auf Basis der obengenannten Polyphosphonate zeigen im Vergleich zu Polycarbonatfolien eine etwas geringere Zugfestigkeit sowie eine verminderte Resistenz gegen zahlreiche Lösungsmittel wie beispielsweise Benzol und Toluol, n-Propanolgemische, wie das Auftreten von Spannungsrissen an der Polyphosphonatfolien beim Kontakt mit derartigen Lösungsmitteln beweist.

Überraschenderweise wurde gefunden, daß die aufgezählten Nachteile der reinen Polycarbonatfolie sowie die aufgezählten Nachteile der reinen Polyphosphonatfolie nicht auftreten, wenn man Mischungen beider Polymere im Verhältnis Polycarbonat zu Polyphosphonat zwischen 40 : 60 und 85 : 15 zu Folien verarbeitet.

Diese positive Veränderung des Gesamteigenschaftsbildes der Folien aus Blends dieser Polymere in den obengenannten Verhältnissen ist um so erstaunlicher, da in Abmischungen beider Polymere die Einzelkomponenten 2-phasig vorliegen, wie aus Messungen der Schubmodulkurve hervorgeht.

So zeigen beispielsweise Folien hergestellt aus 80 Gew.-Teilen eines Bisphenol A-Polycarbonats mit einer relativen Lösungsviskosität von $\eta rel = 1{,}420$ (gemessen in 0,5 %iger Lösung in Methylenchlorid bei 25 °C) und einem Gewichtsmittelmolekulargewicht, $M_w$ von 42 000 sowie 20 Gew.-Teilen eines Polymethylphosphonats auf Basis 4,4'-Dihydroxidiphenyl mit einer relativen Lösungsviskosität von $\eta rel = 1{,}316$ (gemessen in 0,5 %iger Lösung in Methylenchlorid bei 25 °C) Werte für die Zugfestigkeit, Reißdehnung, den spezifischen Durchgangswiderstand $\rho_D$ bei 20 bis 150 °C sowie den dielektrischen Verlustfaktor tan $\delta$ bei 20 bis 150 °C, die denen einer gleichdicken Polycarbonatfolie analog sind, während die Brandwidrigkeitswerte dieser Mischfolie — gemessen nach dem Brandwidrigkeitstest UL-94 VTM, June 25, 1979 — die beste Flammwidrigkeitsklassifizierung V-O erreichen. Diese Klassifizierung wird auch durch eine gleichdicke Folie aus Polymethylphosphonat auf Basis 4,4'-Dihydroxidiphenyl erreicht.

Erfindungsgemäß geeignete Polycarbonate sind aromatische Homopolycarbonate und aromatische Copolycarbonate, denen z. B. ein oder mehrere der folgenden Diphenole zugrundeliegen :

Hydrochinon
Resorcin
Dihydroxidiphenyle
Bis-(hydroxyphenyl)-alkane
Bis-(hydroxyphenyl)-cycloalkane
Bis-(hydroxyphenyl)-sulfide
Bis-(hydroxyphenyl)-ether
Bis-(hydroxyphenyl)-ketone
Bis-(hydroxyphenyl)-sulfoxide
Bis-(hydroxyphenyl)-sulfone
$\alpha,\alpha'$-Bis-(hydroxyphenyl)-diisopropylbenzole sowie deren kernalkylierte Verbindungen.

Diese und weitere geeignete Diphenole sind z. B. in den US-Patentschriften 3 028 365, 2 999 835, 3 148 172, 2 991 273, 3 271 367 und 2 999 846, in den deutschen Offenlegungsschriften 1 570 703,

2 063 050, 2 063 052, 2 211 956, 2 211 957, der französischen Patentschrift 1 561 518 und in der Monographie « H. Schnell, Chemistry and Physics of Polycarbonates, Interscience Publishers, New York, 1964 » beschrieben.

Die aromatischen Polycarbonate können nach bekannten Verfahren hergestellt werden, so z. B. nach dem Schmelzumesterungsverfahren aus Bisphenol und Diphenylcarbonat und dem Zweiphasengrenzflächenverfahren aus Bisphenolen und Phosgen, wie es in der obengenannten Literatur beschrieben ist.

Die aromatische Polycarbonate können durch den Einbau geringer Mengen, vorzugsweise von Mengen zwischen 0,05 und 2,0 Mol-% (bezogen auf eingesetzte Diphenole), an drei- oder mehr als dreifunktionellen Verbindungen, insbesondere solchen mit drei oder mehr als drei phenolischen Hydroxygruppen, verzweigt sein.

Polycarbonate dieser Art sind z. B. in den deutschen Offenlegungsschriften 1 570 533, 1 595 762, 2 116 974, 2 113 347 und 2 500 092, der britischen Patentschrift 1 079 821 und der US-Patentschrift 3 544 514 beschrieben.

Die Gewichtsmittelmolekulargewichte der erfindungsgemäß geeigneten Polycarbonate sollen über 24 000, vorzugsweise zwischen 35 000 und 120 000 und insbesondere zwischen 42 000 und 95 000 liegen (ermittelt aus der Intrinsic-Viskosität, gemessen in $CH_2Cl_2$-Lösung).

Aromatische Polycarbonate im Sinne der Erfindung sind insbesondere Homopolycarbonate aus Bis-2-(4-hydroxyphenyl)-propan (Bisphenol A) sowie Copolycarbonate aus mindestens 30 Mol-%, vorzugsweise mindestens 60 Mol-% und insbesondere mindestens 80 Mol-% an Bisphenol A und bis zu 70 Mol-%, vorzugsweise bis zu 40 Mol-% und insbesondere bis zu 20 Mol-% aus anderen Diphenolen (die Molprozente beziehen sich jeweils auf Gesamtmolmenge an einkondensierten Diphenolen).

Als andere Diphenole sind andere Bis-(hydroxyaryl)-$C_1$-$C_8$-alkane als Bisphenol A sowie Bis-(hydroxyaryl)-$C_5$-$C_6$-cycloalkane geeignet, insbesondere Bis-(4-hydroxyphenyl)-$C_1$-$C_8$-alkane und Bis-(4-hydroxyphenyl)-$C_5$-$C_6$-cycloalkane.

Als andere Diphenole sind beispielsweise

Bis-(4-hydroxyphenyl)-methan (Bisphenol F),
2,4-Bis-(4-hydroxyphenyl)-butan,
1,1-Bis-(4-hydroxyphenyl)-cyclohexan,
2,2-Bis-(3-methyl-4-hydroxyphenyl)-propan,
Bis-(3,5-dimethyl-4-hydroxyphenyl)-methan,
2,2-Bis-(3,5-dimethyl-4-hydroxyphenyl)-propan,
2,4-Bis-(3,5-dimethyl-4-hydroxyphenyl)-2-methylbutan und
1,1-Bis-(3,5-dimethyl-4-hydroxyphenyl)-cyclohexan

geeignet.

Erfindungsgemäß bevorzugte Copolycarbonate enthalten Bisphenol A und 1,1-Bis(4-hydroxyphenyl)-cyclohexan (Bisphenol Z).

Erfindungsgemäß geeignete thermoplastische Polyphosphonate sind verzweigte aromatische Copolyphosphonate mit mittleren Molekulargewichten (Zahlenmittel $\bar{M}_n$) von 11 000 bis 200 000, die aus wiederkehrenden Einheiten der Strukturen

(A)

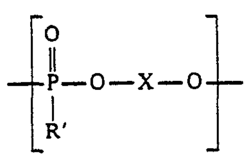

und

(B)

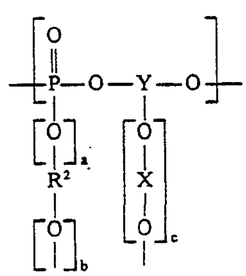

sowie

C) den in den Strukturen A) und B) an Phosphor gebundenen Endgliedern

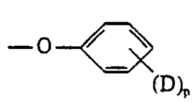

OH $-O-X-OH$

und an den Sauerstoff gebundenen Endgliedern

—H 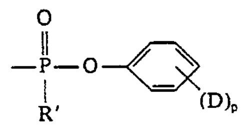 und 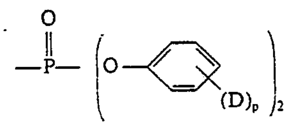

bestehen.

Die Symbole X, D, p und R' sind nachstehend erläutert, wobei der Anteil B), bezogen auf Summe aus A) und B), bis zu 3 Mol-% betragen kann und wobei in den Strukturen A) und B) bedeuten :

R' = mindestens einen der Reste :

$C_1$-$C_{12}$-Alkyl,

$C_2$-$C_{12}$-Alkenyl,

$C_6$-$C_{30}$-Cycloalkyl, -Cycloalkenyl, -Aryl, -Arylalkyl oder -Arylalkenyl, wobei die jeweilige Arylgruppe nicht substituiert oder durch 1 bis 5 $C_1$-$C_4$-Alkylgruppen substituiert ist ;

X = mindestens einen der Reste :

Phenylen 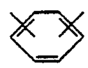

Biphenylylen 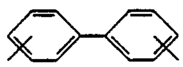

$C_1$—$C_4$-Alkylenbisphenylen 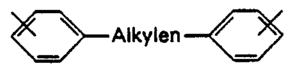

$C_5$—$C_{12}$-Cycloalkylenbisphenylen

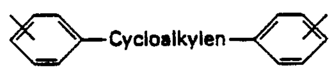

Thiobisphenylen 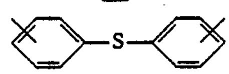

Oxibisphenylen 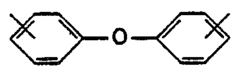

Sulfonylbisphenylen 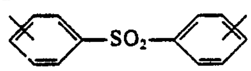

Carbonylbisphenylen 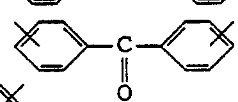

Naphthylen 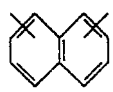

wobei jeder Phenylkern unsubstituiert oder durch 1 bis 4 $C_1$-$C_4$-Alkylgruppen und der Naphthylenkern unsubstituiert oder durch 1 bis 6 mindestens einer der genannten Alkylgruppen substituiert ist ;

Y = einen drei- oder vierwertigen Rest eines um die phenolischen Hydroxylgruppen verminderten trifunktionellen Einkern- oder tri- oder tetrafunktionellen Mehrkernphenols, wobei im Falle des Mehrkernphenols die ein oder zwei phenolische Hydroxygruppen tragenden aromatischen Kerne durch aliphatische $C_1$-$C_7$-Kohlenwasserstoffreste oder durch mindestens einen Benzolrest verbunden sind ;

Y = X, wenn c = 0, a = 1, b = 1 und gleichzeitig $R^2 = Y'(O—X—O)_c$, bzw. $R^2$ = X ist, wobei Y' = Y und c' und 1 oder 2 sind,

a = 0 oder die Zahl 1,

b = 0 oder die Zahl 1,

c = 0 oder eine der Zahlen 1 oder 2, vorzugsweise c = 1 oder 2,

$R^2$ = R', wenn a und b jeweils 0 sind, in diesem Fall muß Y einen drei- oder vierwertigen Rest, wie oben definiert, darstellen,

$R^2$ = 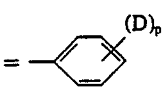

wenn a = 1 oder b = 0 sind, in diesem Fall muß Y einen drei- oder vierwertigen Rest, wie oben definiert, darstellen,

$R^2$ = X oder $Y'(O—X—O)_c$, wenn a und b jeweils 1 sind,

D = gleich oder verschieden und eine $C_1$-$C_4$-Alkylgruppe und p = 0 oder eine Zahl von 1 bis 5, vorzugsweise p = 0, darstellt.

Vorzugsweise haben vorstehende Definitionen folgende Bedeutung :

R' = mindestens einen der Reste Methyl oder Phenyl, insbesondere Methyl,

X = mindestens einen der Reste Phenylen, Biphenylen, $C_1$-$C_4$-Alkylenbisphenylen, wobei jeder Phenylkern durch 1 bis 4 Methylgruppen substituiert sein kann, Cyclohexylenbisphenylen, Oxibisphenyl;en, Thiobisphenylen, Sulfonylbisphenylen, insbesondere $C_1$-$C_4$-Alkylenbisphenylen, wobei jeder Phenylkern durch ein oder zwei Methylgruppen substituiert sein kann,

Y = einen .drei- oder vierwertigen Rest eines um die phenolischen Hydroxylgruppen verminderten trifunktionellen Einkern- oder tri- oder tetrafunktionellen Mehrkernphenols, wobei im Falle des Mehrkernphenols die ein oder zwei phenolische Hydroxylgruppen tragenden aromatischen Kerne durch aliphatische $C_1$-$C_7$-Kohlenwasserstoffreste oder durch mindestens einen Benzolrest verbunden sein können,

a = 0 oder die Zahl 1,

b = 0 oder die Zahl 1,

c = eine der Zahlen 1 oder 2,

$R^2$ = R', wenn a und b jeweils 0 sind,

$R^2$ = 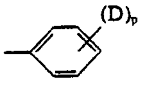

wenn a = 1 und b = 0 sind,

$R^2$ = X oder $Y'(O—X—O)_{c'}$, wenn a und b jeweils 1 sind,

D = gleich oder verschieden und eine $C_1$-$C_4$-Alkylgruppe und p = 0 oder eine Zahl von 1 bis 5, insbesondere p = 0.

Vorzugsweise besitzen die thermoplastischen aromatischen Polyphosphonate mittlere Molekulargewichte (Zahlenmittel $\bar{M}_n$) von 13 000 bis 80 000, insbesondere 13 000 bis 40 000. Die Bestimmung der Molekulargewichte erfolgt nach der Methode der Membranosmose mit Hilfe Membranen, die für Teilchen mit einem Molekulargewicht bis zu 3 000 durchlässig sind.

Die Herstellung der aromatischen Polyphosphonate wird beispielsweise in der deutschen Patentanmeldung P 2 944 093.5 beschrieben.

Nach dem dort beschriebenen Schmelzumesterungs-Verfahren erhält man die erfindungsgemäß bevorzugten Polyphosphonate durch Umsetzung von Phosphonsäurediarylestern, insbesondere Phosphonsäurediphenylestern, mit aromatischen Dihydroxyverbindungen in Gegenwart von 0,01 bis 3 Mol-% (bezogen auf eingesetzte Phosphonsäurediarylester) eines Triarylphosphats, und/oder in Gegenwart von 0,01 bis 3 Mol-% (bezogen auf eingesetzte Dihydroxyverbindung) an aromatischen Tri- oder Tetrahydroxyverbindungen, wobei als Umesterungskatalysatoren neutrale Ester des Titans, des Zirkons oder des Vanadiums, Dialkylzinnoxide, Dialkyldialkoxyzinnverbindungen oder Gemische aus Germaniumdioxid mit einem der vorgenannten Katalysatoren verwendet werden.

Im einzelnen ist aus dieser deutschen Patentanmeldung P 2 944 093.5 die Herstellung von Polyphosphaten wie folgt übernommen :

105,1 Mol des Phosphonsäurediarylesters werden unter Stickstoff mit 99,1 Mol des aromatischen Diols und 0,1 Mol einer 4-wertig phenolisch-OH-funktionellen Verbindung in Gegenwart von $2{,}27 \cdot 10^{-3}$ Gew.-% (bezogen auf 100 Gew.-% des aromatischen Diols) des Katalysators bei 250 °C unter Stickstoff intensiv vermischt. Innerhalb von 3 Stunden wird unter einem von 250 auf 100 mbar absinkendem Vakuum und bei einer von 250 °C auf 265 °C aufsteigenden Temperatur Phenol über eine auf 100 °C beheizte Kolonne abdestilliert. Anschließend wird die Umesterung 5 Stunden unter einem allmählich auf 0,3 mbar absinkendem Druck und einer auf 310 °C ansteigenden Innentemperatur fortgesetzt, wobei die Viskosität der Schmelze ansteigt. Man belüftet den Autoklav mit Stickstoff, läßt das Polymer bei 300 °C und bei stillstehendem Rührer 1 Stunde absitzen und isoliert das Produkt durch Abspinnen unter Druck und Granulieren des Schmelzstranges.

Gegenstand der vorliegenden Erfindung sind somit Mischungen aus 40 Gew.-% bis 85 Gew.-%, vorzugsweise 60 Gew.-% bis 85 Gew.-% halogenfreiem, aromatischem Polycarbonat (Komponente A) mit einem $\bar{M}_w$ (Gewichtsmittelmolekulargewicht) größer 24 000, vorzugsweise 35 000 und 120 000 und insbesondere 42 000 und 95 000, und 60 Gew.-% bis 15 Gew.-%, vorzugsweise 40 Gew.-% bis 15 Gew.-% eines halogenfreien, verzweigten, aromatischen Polyphosphonats (Komponente B) mit einem $\bar{M}_{os}$ (Zahlenmittelmolekulargewicht $\bar{M}_n$ bestimmt durch Membranosmose) von 11 000 bis 200 000, vorzugsweise von 13 000 bis 80 000 und insbesondere von 13 000 bis 40 000.

Gegenstand der vorliegenden Erfindung ist außerdem die Verwendung der erfindungsgemäßen Polycarbonat-Polyphosphonat-Mischungen zur Herstellung von Folien, insbesondere Extrusionsfolien oder Gießfolien in bekannter Weise.

Gegenstand der vorliegenden Erfindung sind somit außerdem Folien, insbesondere Extrusionsfolien oder Gießfolien aus den erfindungsgemäßen Polycarbonat-Polyphosphonat-Mischungen.

Die erfindungsgemäßen Polyphosphonat-Polycarbonat-Abmischungen können nach folgenden vier Verfahren hergestellt werden :

1. Durch gemeinsames Aufschmelzen des Polycarbonats und des Polyphosphonats unter gleichzeitiger oder nachfolgender inniger Vermischung der Schmelze und anschließender Extrusion der homogenisierten Schmelze in einer geeigneten Apparatur.

2. Durch Aufschmelzen des Polycarbonats in einer geeigneten Apparatur und Eindosierung des Polyphosphonats in die Schmelze des Polycarbonats, Homogenisierung und anschließende Extrusion des Gemisches in einer geeigneten Apparatur.

3. Durch Mischen der Lösungen des Polycarbonats und des Polyphosphonats, Ausdampfen des Lösungsmittels unter Aufschmelzen der Mischung und gleichzeitige Extrusion.

4. Durch Zumischen einer Lösung des Polycarbonats zur Schmelze des Polyphosphonats, Ausdampfen des Lösungsmittels unter Aufschmelzen des Polycarbonats, Homogenisierung der Schmelze und anschließende Extrusion in einer geeigneten Apparatur.

Bevorzugte Mischungsverfahren sind die Verfahren 1 bis 3, besonders bevorzugt ist das Mischungsverfahren 1.

Als geeignete Apparaturen für die Herstellung der erfindungsgemäßen Polycarbonat-Polyphosphonat-Gemische sind Walzen, Knet- und Schneckenmaschinen zu verstehen. Bevorzugte Apparaturen sind Schneckenmaschinen, insbesondere Zweiwellenschneckenmaschinen.

Die Herstellung der Extrusionsfolien aus den erfindungsgemäßen Abmischungen kann in bekannter Weise, z. B. auf normalen, dem Stand der Technik gemäßen, eingängigen Dreizonenschnecken erfolgen, wobei die Verformung zu Folien sowohl über Breitschlitzdüsen zu Flachfolien als auch über Folienblasköpfe zu Blasfolien erfolgen kann.

Die Herstellung der erfindungsgemäßen halogenfreien flammwidrigen Polyphosphonat-Polycarbonat-Folien kann ebenfalls nach dem Gießverfahren in bekannter Weise erfolgen. Hierbei wird das Polyphosphonat-Polycarbonat-Gemisch in einem gemeinsamen Lösungsmittel wie beispielsweise Methylenchlorid oder einem Gemisch aus Methylenchlorid und Chloroform gelöst, und diese Lösung anschließend nach dem Gießverfahren zu Folien verarbeitet.

Die erfindungsgemäßen halogenfreien, nicht korrodierend wirkenden Polyphosphonat-Polycarbonat-Mischfolien besitzen eine hohe mechanische Festigkeit, eine hohe Wärmeformbeständigkeit und Dauerwärmebeständigkeit, gute elektrische Isolationseigenschaften und eine ausgezeichnete Brandwidrigkeit, wodurch sie hervorragend geeignet sind zum Einsatz in elektrischen Bauteilen wie z. B. solchen des Verkehrs-, Transport- und Fernmeldewesens sowie in elektrischen Bauteilen von Datenverarbeitungsanlagen, bei denen eine solche Eigenschaftskombination von besonderem Wert ist.

Den erfindungsgemäßen Abmischungen können gleichfalls die aus der Polyphosphonatchemie und Polycarbonatchemie bekannten monomeren und polymeren Additive bzw. Füllstoffe zugesetzt werden.

Erwähnt seien in diesem Zusammenhang beispielsweise Farbstoffe, Pigmente, Entformungsmittel, Stabilisatoren gegen Feuchtigkeits-, Hitze- und UV-Einwirkung, Gleitmittel, Füllstoffe, wie Glaspulver, Quarzerzeugnisse, Graphit, Molybdänsulfid, Metallpulver, Pulver höherschmelzender Kunststoffe, z. B. Polytetrafluorethylenpulver, natürliche Fasern, wie Baumwolle, Sisal und Asbest, ferner Glasfasern der verschiedensten Art, Metallfäden sowie während des Verweilens in der Schmelze der Polycarbonate stabile und die Polycarbonate nicht merklich schädigende Fasern.

Die in den Beispielen genannten Folien aus Polyphosphonat und Polycarbonat wurden durch gemeinsames Aufschmelzen des Polycarbonats und des Polyphosphonats unter gleichzeitiger inniger Vermischung der Schmelze hergestellt, wobei die homogenisierte Mischung über eine Breitschlitzdüse ausgedrückt und über eine Chill-Roll-Anlage zu Folien der in den Beispielen genannten Dicken abgezogen wurde.

Die Prüfung der Zugfestigkeit und Reißdehnung der Folien erfolgte gemäß DIN 53 455. Die Prüfung des spezifischen Durchgangswiderstandes $\rho_D$ erfolgte gemäß der Vorschrift VDE 0303 Teil 4; die Prüfung des dielektrischen Verlustfaktors tan $\delta$ erfolgte gemäß der Vorschrift VDE 0303 Teil 3.

Die Prüfung der Brandwidrigkeit der Folien erfolgte gemäß dem Test UL-94, Abs. 8 « Vertical Burning Test for Classifying Materials 94 VTM-0, 94 VTM-1 or 94 VTM-2 », June 25, 1979.

Beispiel 1

80 Gew.-% eines Polycarbonats auf Basis Bisphenol A (Komponente A) mit einer relativen Lösungsviskosität von $\eta rel = 1{,}420$ (gemessen in 0,5 %iger Lösung in Methylenchlorid bei 25 °C) und einem Molekulargewicht $M_w = 40\,000$ (gemessen nach der Lichtzerstreumethode) und 20 Gew.-% eines Polymethylphosphonats auf Basis 4,4'-Dihydroxydiphenyl (Komponente B) mit einer relativen Lösungsviskosität von $\eta rel = 1{,}316$ und einem Zahlenmittel-Molekulargewicht $M_n = 26\,700$ [hergestellt gemäß Beispiel 1 der deutschen Patentanmeldung P 2 944 093.5 (Le A 19 968)] werden gemeinsam in einer 2-Wellenschnecke aufgeschmolzen, innig vermischt und die homogenisierte Schmelze über eine Breitschlitzdüse zu Folien von 0,05 mm, 0,1 mm und 0,2 mm Dicke extrudiert. Die Eigenschaften dieser Folien sind in der Tabelle 1 vergleichend zu den Eigenschaften einer reinen Polycarbonatfolie der Komponente A (Herstellung siehe Vergleichsbeispiel 1) und vergleichend zu den Eigenschaften einer reinen Polymethylphosphonatfolie der Komponente B (Herstellung siehe Vergleichsbeispiel 2) aufgeführt.

Vergleichsbeispiel 1

Aus Polycarbonat vom Typ der Komponente A wurden auf einer Doppelwellenschnecke, die mit einer

Breitschlitzdüse versehen war, Folien von 0,05 mm, 0,1 mm und 0,2 mm Dicke extrudiert. Deren Eigenschaften sind vergleichend in Tabelle 1 aufgeführt.

Vergleichsbeispiel 2

Aus Polymethylphosphonat vom Typ der Komponente B wurden auf einer Doppelwellenschnecke, die mit einer Breitschlitzdüse versehen war, Folien von 0,05 mm, 0,1 mm und 0,2 mm Dicke extrudiert. Deren Eigenschaften sind vergleichend in Tabelle 1 aufgeführt.

Tabelle 1

Vergleich der Eigenschaften der Folien aus Beispiel (1), Vergleichsbeispiel (1) und Vergleichsbeispiel (2)

| Foliendicke (in mm) | | Zugfestigkeit (MPa)/Reißdehnung (%) | spez. Durchgangswid. $\rho_D$ ($\Omega \cdot cm$) (20°/150°) | tan $\delta$ (20°/150°) | Brandverhalten nach UL-94 VTM |
|---|---|---|---|---|---|
| 0,05 | Vgl.-bsp. (2) | 50/30 | $2 \cdot 10^{16}/5 \cdot 10^{12}$ (140°) | $3 \cdot 10^{-3}/4 \cdot 10^{-2}$ (140°) | 94-VTM-O |
| | Vgl.-bsp. (1) | 100/120 | $10^{16}/4 \cdot 10^{15}$ | $2 \cdot 10^{-3}/4 \cdot 10^{-3}$ | 94-VTM-2 |
| | Bsp. (1) | 100/130 | $5 \cdot 10^{16}/2 \cdot 10^{15}$ | $1{,}7 \cdot 10^{-3}/5 \cdot 10^{-3}$ | 94-VTM-O |
| 0,10 | Vgl.-bsp. (2) | 50/30 | $2 \cdot 10^{16}/5 \cdot 10^{12}$ (140°C) | $3 \cdot 10^{-3}/4 \cdot 10^{-2}$ (140°) | 94-VTM-O |
| | Vgl.-bsp. (1) | 100/200 | $10^{16}/4 \cdot 10^{15}$ | $2 \cdot 10^{-3}/4 \cdot 10^{-3}$ | brennt ab, nicht klassifizierbar |
| | Bsp. (1) | 105/130 | $5 \cdot 10^{16}/2 \cdot 10^{15}$ | $1{,}7 \cdot 10^{-3}/5 \cdot 10^{-3}$ | 94-VTM-O |
| 0,20 | Vgl.-bsp. (2) | 50/30 | $2 \cdot 10^{16}/5 \cdot 10^{12}$ (140°C) | $3 \cdot 10^{-3}/4 \cdot 10^{-2}$ (140°) | 94-VTM-O |
| | Vgl.-bsp. (1) | 100/120 | $10^{16}/4 \cdot 10^{-15}$ | $2 \cdot 10^{-3}/4 \cdot 10^{-3}$ | brennt ab, nicht klassifizierbar |
| | Bsp. (1) | 95/130 | $5 \cdot 10^{16}/2 \cdot 10^{15}$ | $1{,}7 \cdot 10^{-3}/5 \cdot 10^{-3}$ | 94-VTM-O |

Beispiel 2

40 Gew.-% eines Polycarbonats vom Typ der Komponente A und 60 Gew.-% eines Polymethylphosphonats vom Typ der Komponente B wurden gemeinsam in einer 2-Wellenschnecke aufgeschmolzen, innig vermischt und die homogenisierte Schmelze zu Folien von 0,05 mm, 0,1 mm und 0,2 mm Dicke extrudiert. Die Eigenschaften dieser Folien sind in der Tabelle 2 aufgeführt.

Tabelle 2

| Dicke der Folie (in mm) | Zugfestigkeit (MPa)/Reißdehnung (%) | Spez. Durchgangswid. $\rho_D$ ($\Omega \cdot cm$) (20°/150°) | tan $\delta$ (20°/150°) | Brandverhalten nach UL-94-VTM |
|---|---|---|---|---|
| 0,05 | 70 MPa 120% | $5 \cdot 10^{16}/2 \cdot 10^{15}$ | $2 \cdot 10^{-3}/5 \cdot 10^{-3}$ | 94-VTM-O |
| 0,10 | 70 MPa 120% | $5 \cdot 10^{16}/2 \cdot 10^{15}$ | $2 \cdot 10^{-3}/5 \cdot 10^{-3}$ | 94-VTM-O |
| 0,20 | 70 MPa 120% | $5 \cdot 10^{16}/2 \cdot 10^{15}$ | $2 \cdot 10^{-3}/5 \cdot 10^{-3}$ | 94-VTM-O |

## Beispiel 3

85 Gew.-% eines Polycarbonats vom Typ der Komponente A und 15 Gew.-% eines Polymethylphosphonats vom Typ der Komponente B wurden gemeinsam in einer 2-Wellenschnecke aufgeschmolzen, innig vermischt und die homogenisierte Schmelze zu Folien von 0,05 mm, 0,1 mm und 0,2 mm Dicke extrudiert. Die Eigenschaften dieser Folien sind in der Tabelle 3 aufgeführt.

Tabelle 3

| Dicke der Folie (in mm) | Zugfestigkeit (MPa)/Reißdehnung (%) | Spez. Durchgangswid. $\rho_D$ ($\Omega \cdot cm$) (20°/150°) | tan $\delta$ (20°/150°) | Brandverhalten nach UL-94-VTM |
|---|---|---|---|---|
| 0,05 | 85 MPa 140% | $6 \cdot 10^{16}/8 \cdot 10^{15}$ | $1{,}3 \cdot 10^{-3}/6 \cdot 10^{-3}$ | 94-VTM-C |
| 0,10 | 90 MPa 135 % | $6 \cdot 10^{16}/8 \cdot 10^{15}$ | $1{,}3 \cdot 10^{-3}/6 \cdot 10^{-3}$ | 94-VTM-O |
| 0,20 | 85 MPa 140% | $6 \cdot 10^{16}/8 \cdot 10^{15}$ | $1{,}3 \cdot 10^{-3}/6 \cdot 10^{-3}$ | 94-VTM-C |

## Beispiel 4

80 Gew.-% eines Polycarbonats vom Typ der Komponente A und 20 Gew.-% eines Polymethylphosphonats auf Basis Bisphenol A (Komponente B) mit einer relativen Lösungsviskosität von $\eta rel = 1{,}280$ und einem Zahlenmittel-Molekulargewicht von $\bar{M}_n = 22\,000$ (hergestellt gemäß Beispiel 9 der deutschen Patentanmeldung P 2 944 093.5) werden gemeinsam in einer 2-Wellenschnecke aufgeschmolzen, innig vermischt und die homogenisierte Schmelze über eine Breitschlitzdüse zu Folien von 0,05 mm, 0,1 mm und 0,2 mm Dicke extrudiert.

Die Eigenschaften dieser Folien sind in der Tabelle 4 aufgeführt.

Tabelle 4

| Dicke der Folie (in mm) | Zugfestigkeit (MPa)/Reißdehnung (%) | Spez. Durchgangswid. $\rho_D$ ($\Omega \cdot cm$) (20°/150°) | tan $\delta$ (20°/150°) | Brandverhalten nach UL-94-VTM |
|---|---|---|---|---|
| 0,05 | 90 MPa 130 % | $6 \cdot 10^{16}/8 \cdot 10^{15}$ | $1{,}3 \cdot 10^{-3}/6 \cdot 10^{-3}$ | 94-VTM-O |
| 0,10 | 90 MPa 135 % | $6 \cdot 10^{16}/8 \cdot 10^{15}$ | $1{,}3 \cdot 10^{-3}/5 \cdot 10^{-3}$ | 94-VTM-O |
| 0,20 | 95 MPa 140 % | $6 \cdot 10^{16}/8 \cdot 10^{15}$ | $1{,}3 \cdot 10^{-3}/5 \cdot 10^{-3}$ | 94-VTM-O |

## Beispiel 5

Es wurden 17 Gew.-% eines Polymethylphosphonats auf Basis Bisphenol A mit einer relativen Lösungsviskosität von $\eta rel = 1{,}280$ und einem Zahlenmittel-Molekulargewicht von $\bar{M}_n = 22\,000$ (hergestellt gemäß Beispiel 9 der deutschen Patentanmeldung P 2 944 093.5) und 83 Gew.-% eines Polycarbonats auf Basis Bisphenol A mit einem Gewichtsmittel-Molekulargewicht von $M_w = 80\,000$ und einer relativen Lösungsviskosität von $\eta rel = 1{,}80$ in Methylenchlorid in einer Konzentration von insgesamt 15 Gew.-% gelöst. Diese Lösung wurde filtriert, entgast und auf einer Trommelgießmaschine zur 0,05 mm dicken Folie vergossen.

Diese Folie zeigte folgende Eigenschaften :

| | |
|---|---|
| Zugfestigkeit | 90 MPa |
| Reißdehnung | 100 % |
| Spez. Durchgangswiderstand $\rho_D$ (20 °C/150 °C) | $8 \cdot 10^{16}/2 \cdot 10^{15} \Omega \cdot cm$ |
| tan $\delta$ bei 50 Hz (20 °C/150 °C) | $3 \cdot 10^{-3}/5 \cdot 10^{-3}$ |
| Brandverhalten nach UL-94-VTM | 94-VTM-0 |

Zur Prüfung der Resistenz gegen Lösungsmittel wurden Folienstreifen der Dicke 0,05 mm und von 15 mm Breite spiralförmig um einen Glasstab von 8 mm Durchmesser gewickelt und 10 Sekunden in Mischungen aus Toluol/n-Propanol = 1/3 getaucht. Anschließend wurden Zugfestigkeit und Reißdehnung der so behandelten Folien bestimmt. Die erhaltenen Werte sind in der Tabelle 5 gelistet.

Tabelle 5

| Beispiel | Zugfestigkeit (MPa) | Reißdehnung (%) |
|---|---|---|
| 1 | 90 | 110 |
| 2 | 70 | 100 |
| 3 | 100 | 120 |
| 4 | 90 | 110 |
| 5 | 87 | 100 |
| Vergleichsbeispiel 1 | 100 | 120 |
| Vergleichsbeispiel 2 | versprödet | nicht meßbar |

## Patentansprüche

1. Mischungen aus
40 Gew.-% bis 85 Gew.-% halogenfreiem, aromatischen Polycarbonat (= Komponente A) mit einem $\bar{M}_w$ (Gewichtsmittelmolekulargewicht) größer 24 000 und
60 Gew.-% bis 15 Gew.-% eines halogenfreien verzweigten aromatischen Polyphosphonats (= Komponente B) mit einem $\bar{M}_{os}$ (Zahlenmittelmolekulargewicht) von 11 000 bis 200 000.

2. Mischungen gemäß Anspruch 1, dadurch gekennzeichnet, daß das $\bar{M}_w$ der Polycarbonatkomponente A 35 000 bis 120 000 ist.

3. Mischungen gemäß Ansprüchen 1 und 2, dadurch gekennzeichnet, daß sie aus 60 bis 85 Gew.-% der Komponente A und 40 bis 15 Gew.-% der Komponente B bestehen.

4. Verwendung der Mischungen gemäß Ansprüchen 1 bis 3 zur Herstellung von Folien.

5. Verwendung der Mischungen gemäß Ansprüchen 1 bis 3 zur Herstellung von Extrusionsfolien oder Gießfolien.

## Claims

1. Mixtures of
40 % by weight to 85 % by weight of a halogen-free aromatic polycarbonate (= component A) having a $\bar{M}_w$ (weight-average molecular weight) greater than 24 000 and
60 % by weight to 15 % by weight of a halogen-free branched aromatic polyphosphonate (= component B) having a $\bar{M}_{os}$ (number-average molecular weight) of 11,000 to 200,000.

2. Mixtures according to Claim 1, characterised in that the $\bar{M}_w$ of the polycarbonate component A is 35,000 to 120,000.

3. Mixtures according to Claims 1 and 2, characterized in that they consist of 60 to 85 % by weight of component A and 40 to 15 % by weight of component B.

4. Use of the mixtures according to Claims 1 to 3 for producing films.

5. Use of the mixtures according to Claims 1 to 3 for producing extruded films or cast films.

## Revendications

1. Mélanges de
40 % en poids à 85 % en poids d'un polycarbonate aromatique ne contenant pas d'halogène (= composant A) ayant une valeur $\bar{M}_p$ (moyenne en poids du poids moléculaire) supérieure à 24 000 et de

60 % en poids à 15 % en poids d'un polyphosphonate aromatique ramifié ne contenant pas d'halogène (= composant B) ayant une valeur $\bar{M}_{os}$ (moyenne en nombre du poids moléculaire) de 11 000 à 200 000.

2. Mélanges suivant la revendication 1, caractérisés en ce que la valeur $\bar{M}_p$ du composant polycarbonate (A) est de 35 000 à 120 000.

3. Mélanges suivant les revendications 1 et 2, caractérisés en ce qu'ils sont formés de 60 à 85 % en poids du composant (A) et de 40 à 15 % en poids du composant (B).

4. Utilisation des mélanges suivant les revendications 1 à 3 pour la production de feuilles.

5. Utilisation des mélanges suivant les revendications 1 à 3 pour la production de feuilles extrudées ou de feuilles moulées.